# EUROPEAN PATENT APPLICATION

(11) **EP 4 184 133 A1**
(43) Date of publication of application: **24.05.2023**
(21) Application number: 21209034.4
(22) Date of filing: 18.11.2021
(51) Int. Cl.: G01H 3/06

(54) **A METHOD AND AN ARRANGEMENT FOR MONITORING OF AN ELECTRIC DRIVE SYSTEMS DEVICE**

(71) Applicant: ABB SCHWEIZ AG, 5400 Baden (CH)
(72) Inventor: Holopainen, Timo, 00380 Helsinki (FI); Roivainen, Janne, 00380 Helsinki (FI); Iisakkala, Jarkko, 33960 Pirkkala (FI); Ryyppö, Tommi, 00380 Helsinki (FI); Ikäheimo, Jouni, 65320 Vaasa (FI); Liukkonen, Olli, 00380 Helsinki (FI); Toukonen, Jukka, 33960 Pirkkala (FI); Westerlund, Jan, 00380 Helsinki (FI)
(74) Representative: Kolster Oy Ab

(57) **Abstract**

The invention relates to the field of electric drive devices and electric machines, such as electric drive motors and electric generators for industrial applications, and more particularly to a method and an arrangement for monitoring of an electric drive systems device. The arrangement for monitoring of an electric drive systems device (11, 12) according to the present invention comprises an electric drive systems device (11, 12), and one or more microphones (21-25) arranged inside a frame of said electric drive systems device (11, 12), wherein said one or more microphones (21-25) is/are arranged for measuring sound inside said electric drive systems device (11, 12) and for producing measured sound data, said measured sound data being utilized in monitoring of said electric drive systems device (11, 12).

## Description

### FIELD OF THE INVENTION

The present invention relates to the field of electric drive devices and electric machines, such as electric drive motors and electric generators for industrial applications, and more particularly to a method and an arrangement for monitoring of an electric drive systems device.

### BACKGROUND OF THE INVENTION

Electric drive systems are widely used for industrial applications, e.g. for providing and controlling electrical power and energy to various public and industrial applications as well as for driving and controlling various public and industrial applications. Electric drive systems devices comprise electric drives and electric machines.

Electric drives are used in industry for different applications, such as for driving motors within the transportation industry, for driving different devices within the process and manufacturing industry as well as within the energy industry. There are applications commonly used for electric drives within the transportation industry for example in metro and railway traffic applications as well as in ship propulsion unit applications of the marine industry. Within the process and manufacturing industry, electric drives can be used for example in conveyer applications, in mixer applications or even in paper machine applications. Within the energy industry, electric drives can be used for example as electric drives for wind turbines of the wind power industry.

Electric drives for electric machines, such as for electric motors and electric generators, may be divided into DC drives (DC, direct current) and AC drives (AC, alternating current). E.g. in a DC motor of a DC drive, a magnetic field is generated by the current through the field winding in the stator. This magnetic field is always maintained at right angles to the field generated by the armature winding. In this way, a DC motor's torque is generated, which torque can then be easily controlled in a DC drive by changing the armature current and keeping the magnetizing current constant. In a DC drive, also the DC motor speed can be controlled directly through armature current.

Within electric drives, the AC drives may further be divided into frequency-controlled AC drives, flux-vector-controlled AC drives and into AC drives utilising direct torque control (DTC, Direct Torque Control). In flux-vector-controlled AC drives and in direct torque control AC drives the torque of the three-phase motor or generator can be controlled, whereas in frequency-controlled AC drives the driven/driving machine dictates the torque level.

In electric machines, the foundations of the electric machine may vary significantly. Mechanical properties of the mechanical system such as natural frequencies, stiffness of different parts and damping factors determine the vibration behaviour of the system on site conditions. The mechanical system including the electric machine are closely related to potential excessive vibrations and electric machine faults.

The main two types of measurement solutions for monitoring of electric drive systems devices are measuring relative shaft displacement and measuring bearing housing acceleration. The relative shaft displacement is typically measured only for journal bearing machines with an integrated sensor system. The shaft displacements are typically measured in both bearings in two directions (2 + 2).

The bearing housing acceleration measurement is commonly used for all types of machines either with a portable or integrated measuring system. Traditionally, prior art solutions for monitoring of electric drive systems devices, such as rotating machines, are usually based on measuring vibrations. The bearing housing vibrations are typically measured in both bearings in three directions (3 + 3). In addition, it is usually recommended that the bearing housing measurements in the horizontal and vertical directions are measured in the radial direction with respect to the rotor axis.

Currently, there is a growing need to equip machines with a cost-effective monitoring system based on as-few-as possible sensors. This pressure for a cost-effective monitoring system is particularly high in small electric drive systems devices. There is a remarkable need for a cost-effective sensor system for continuous monitoring of electric drive systems devices.

A part of the cost issue is related to the characteristics of a typical sensor, i.e. an accelerometer. Each acceleration sensor is positioned in one location, and it measures the vibration in one direction.

Also a tri-axial acceleration sensor may be used, said tri-axial acceleration sensor measuring the vibration in three directions. In case of an a tri-axial acceleration sensor, the position of the acceleration sensor is still fixed, and the radial direction can be observed only for one direction. Fortunately, it is true that the sensor in one location can observe vibrations originating from other parts of the machine due to structure borne vibrations. However, the sensor is most sensitive close to the source of excitations.

Nowadays, there is also a need for solution for monitoring of an electric drive systems device, that could efficiently be utilized in condition monitoring, in diagnostic monitoring and/or in operational optimization of the electric drive systems device.

In today's demanding environment, there is a need for a method and an arrangement for monitoring of an electric drive systems device, the monitoring of which is less expensive, easier, and more efficient. There is a demand in the market for a method and an arrangement for monitoring of an electric drive systems device that would be more efficient and easier to carry out in operational condition than the current prior art solutions.

### BRIEF DESCRIPTION OF THE INVENTION

The object of the invention is to introduce a method and an arrangement for monitoring of an electric drive systems device, the monitoring of which is less expensive, easier and more efficient, especially in operational condition. Advantageous embodiments are furthermore presented.

It is brought forward a new method for monitoring of an electric drive systems device, in which method sound inside an electric drive systems device is measured as measured sound data by one or more microphones arranged inside a frame of an electric drive systems device, said measured sound data being utilized in monitoring of said electric drive systems device.

In a preferred embodiment of said method, sound time and frequency data of said electric drive systems device is identified utilizing said measured sound data.

In a preferred embodiment of said method, the condition of the electric drive systems device is analysed, and a condition analysis is produced utilizing said identified sound time and frequency data.

In a preferred embodiment of said method, the condition of the electric drive systems device is determined, and a condition determination is produced utilizing said identified sound time and frequency data and/or said produced condition analysis.

In a preferred embodiment of said method, said measured sound data and/or said identified sound time and frequency data is utilized in condition monitoring of said electric drive systems device, in diagnostic monitoring of said electric drive systems device and/or in operational optimization of said electric drive systems device.

In a preferred embodiment of said method, said condition analysis and/or said condition determination is utilized in condition monitoring of said electric drive systems device, in diagnostic monitoring of said electric drive systems device and/or in operational optimization of said electric drive systems device.

Furthermore, it is brought forward a new arrangement for monitoring of an electric drive systems device, said arrangement comprising an electric drive systems device, and one or more microphones arranged inside a frame of said electric drive systems device, wherein said one or more microphones is/are arranged for measuring sound inside said electric drive systems device and for producing measured sound data, said measured sound data being utilized in monitoring of said electric drive systems device.

In a preferred embodiment, some or all of said one or more microphones is/are positioned in a small recess inside the frame of said electric drive systems device.

In a preferred embodiment, some or all of said one or more microphones comprises/comprise a protective hood arranged inside the frame of said electric drive systems device.

In a preferred embodiment, some or all of said one or more microphones is/are arranged to tolerate very high sound pressure levels up to 160 dB SPL.

In a preferred embodiment, some or all of said one or more microphones is/are arranged to detect sound frequencies from 20 Hz to 20 kHz and/or infrasound frequencies from 2 Hz to 20 Hz and/or ultrasound frequencies from 20 kHz to 200 kHz.

In a preferred embodiment, said arrangement comprises a frequency converter having a data analysis unit arranged for analysing said measured sound data and for monitoring of the electric drive systems device.

In a preferred embodiment, said arrangement comprises an external data analysis system arranged for analysing said measured sound data and/or for monitoring of the electric drive systems device.

In a preferred embodiment, said arrangement comprises a user apparatus arranged for receiving said measured sound data and for forwarding said measured sound data to said external data analysis system.

In a preferred embodiment, said measured sound data is utilized in condition monitoring of said electric drive systems device, in diagnostic monitoring of said electric drive systems device and/or in operational optimization of said electric drive systems device.

Furthermore, it is brought forward a new frequency converter of an arrangement for monitoring of an electric drive systems device, said arrangement comprising an electric drive systems device, and one or more microphones arranged inside a frame of said electric drive systems device, wherein said one or more microphones is/are arranged for measuring sound inside said electric drive systems device and for producing measured sound data, said measured sound data being utilized in monitoring of said electric drive systems device.

### BRIEF DESCRIPTION OF THE DRAWINGS

In the following, the present invention will be described in more detail by way of example and with reference to the attached drawings, in which:
Figure 1 illustrates an embodiment of an arrangement for monitoring of an electric drive systems device according to the present invention.
Figure 2 illustrates another embodiment of an arrangement for monitoring of an electric drive systems device according to the present invention.
Figure 3 illustrates a third embodiment of an arrangement for monitoring of an electric drive systems device according to the present invention.
Figure 4 illustrates a flow diagram of an embodiment of a method for monitoring of an electric drive systems device according to the present invention.
Figure 5 illustrates a flow diagram of another embodiment of a method for monitoring of an electric drive systems device according to the present invention.
Figure 6 illustrates a block diagram of a fourth embodiment of an arrangement for monitoring of an electric drive systems device according to the present invention.
Figure 7 illustrates a block diagram of a fifth embodiment of an arrangement for monitoring of an electric drive systems device according to the present invention.
Figure 8 illustrates a block diagram of a sixth embodiment of an arrangement for monitoring of an electric drive systems device according to the present invention.

The foregoing aspects, features and advantages of the invention will be apparent from the drawings and the detailed description related thereto.

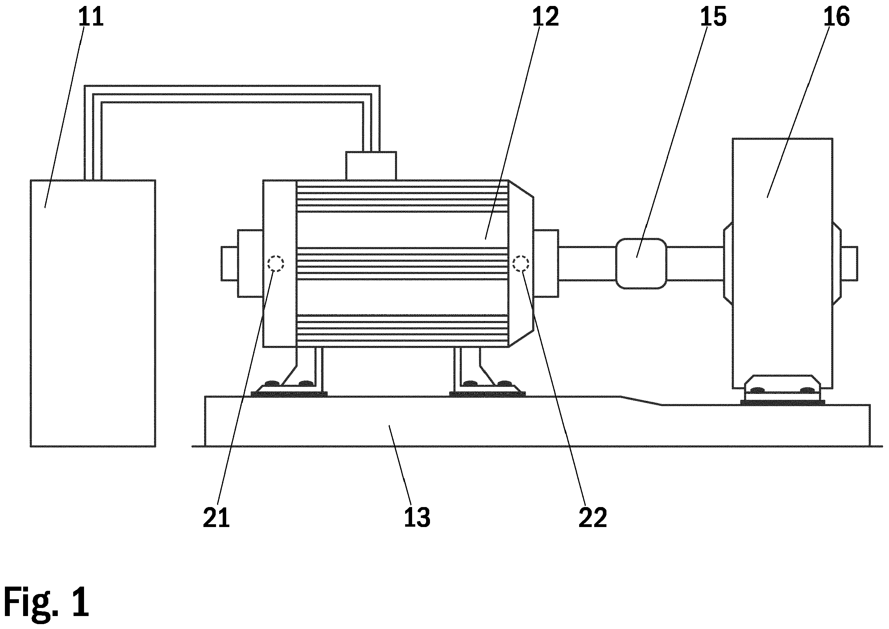

In the following, the invention will be described in greater detail by means of preferred embodiments with reference to the accompanying drawings of Figures 1 to 8.

### DETAILED DESCRIPTION

The arrangement for monitoring of an electric drive systems device according to one embodiment of the present invention comprises an electric drive systems device, and one or more microphones arranged inside a frame of said electric drive systems device, wherein said one or more microphones is/are arranged for measuring sound inside said electric drive systems device and for producing measured sound data, said measured sound data being utilized in monitoring of said electric drive systems device.

It is well known that many malfunctions and vibration problems in an electric drive systems device can be identified from the emitted sound. However, the sound field around an electric drive systems device typically is not homogeneous and the surrounding machinery may disturb the identification.

Acoustic emission has been successfully used for monitoring and diagnostics of machines for a long time. For example International Organization for Standardization standard ISO 22096:2007 specifies the general principles required for the application of acoustic emission to monitoring and diagnostics of machinery operating under a range of conditions and environments. It is well known that many malfunctions and vibration problems in an electric drive systems device can be identified from the emitted sound by an experienced ear. The identification can be enhanced by moving around the device. Sometimes, the other sources of noise may disturb this identification process due to shared sound field. Another problem to apply acoustic emission for continuous operationally optimal condition monitoring is the need to have the microphone some distance away from the machine. This means that the microphone sensor system should be a separate unit.

When referring to the term "electric drive systems device", in this application, it is meant to refer to any drive-controlled electric machines and to any electric drives for electric machines, this comprising electric motors and electric generators as well as DC drives and AC drives including frequency-controlled AC drives, flux-vector-controlled AC drives, direct-torque-controlled AC drives and frequency converters.

Figure 1 illustrates an embodiment of an arrangement for monitoring of an electric drive systems device according to the present invention. The presented embodiment of an arrangement for monitoring of an electric drive systems device comprises a frequency converter 11 and an electric drive systems device 12. In the presented embodiment said electric drive systems device 12 is a motor 12, which motor 12 is installed on a motor foundation 13. In the presented embodiment, a driven/driving machine system 16 is connected to said motor 12 via a coupling arrangement 15. Whereas in the presented embodiment a driven machine 16 connected to said motor 12 is shown as a driven/driving machine 16, in another embodiment of the present invention the driven/driving machine 16 could be replaced by one or more driven/driving machine devices and/or one or more gears/ gear arrangements and/or one or more shafts/ shaft systems connected to said electric drive systems device 12. Whereas in the presented embodiment a motor is shown as an electric drive systems device, in another embodiment of the present invention the motor could be replaced by a generator as an electric drive systems device.

In the presented embodiment, said arrangement for monitoring of an electric drive systems device comprises one or more microphones 21, 22 arranged inside the frame of said electric drive systems device 12, i.e. said motor 12. Said one or more microphones 21, 22 arranged inside the frame of said motor 12 is/are utilised for measuring sound inside said motor 12. Said measured sound is used for monitoring of an electric drive systems device, i.e. in the presented embodiment for monitoring of said motor 12. In the embodiment presented in Figure 1 the positions of the microphones 21, 22 arranged inside the frame of said motor 12 are indicated by a broken line.

In the presented embodiment, said one or more microphones 21, 22 is/are positioned inside the machine frame or bearing shield of said electric drive systems device, i.e. motor 12. Said one or more microphones 21, 22 may be positioned in any suitable location inside the frame or bearing shield of said electric drive systems device. When referring to the term a location "inside the frame" of an electric drive systems device, in this application it is meant to refer to a location inside the frame or inside the bearing shield of said electric drive systems device.

In an embodiment of the present invention, some or all of said one or more microphones 21, 22 may be positioned in a small recess inside the frame of said electric drive systems device. Furthermore, in an embodiment of the present invention, some or all of said one or more microphones 21, 22 may comprise a special hood/hoods arranged inside the frame of said electric drive systems. Said special hood/hoods may be arranged to help the microphone for protection against abrasion particles inside the motor and/or for avoidance of direct cooling noise.

In an embodiment of the present invention, some or all of said one or more microphones 21, 22 may be located inside the device frame in large cavities in both ends of said electric drive systems device. For example, in an electric drive systems device, there are large cavities in both ends of the electric drive systems device, where said one or more microphones 21, 22 may be located.

The sound pressure is a scalar quantity. Therefore, each microphone of said one or more microphones 21, 22 can detect sound coming from different directions. The sound pressure also has integrative character. This means that the vibrations of any surface of the cavity emits acoustic waves to be heard by the microphone.

Having said one or more microphones 21, 22 positioned inside the frame of said electric drive systems device, the external airborne disturbance from surrounding machinery can be avoided. Said microphones 21, 22 inside the frame of said electric drive systems device can also observe phenomena inside the frame of said electric drive systems device, e.g. partial discharges, that are not easy to detect outside the frame of said electric drive systems device. Said microphones 21, 22 inside the frame of said electric drive systems device may be especially arranged to tolerate very high sound pressure levels up to 160 dB SPL (SPL, Sound Pressure Level) inside the electric drive systems device.

In an embodiment of the present invention, some or all of said one or more microphones 21, 22 may be inserted inside the frame of said electric drive systems device through a threaded hole in the wall of the frame or bearing shield. In an embodiment of the present invention, a processing unit and a transmitter of said one or more microphones 21, 22 may be located on the other side outside of the wall of the frame or bearing shield.

When referring to the term "sound", in this application it is meant to refer to standard audio band frequencies from 20 Hz to 20 kHz and also to neighbouring infrasound frequencies from 2 Hz to 20 Hz and to neighbouring ultrasound frequencies from 20 kHz to 200 kHz.

In an embodiment of the present invention, some or all of said one or more microphones 21, 22 may be arranged to detect standard audio band frequencies from 20 Hz to 20 kHz and/or infrasound frequencies from 2 Hz to 20 Hz and/or ultrasound frequencies from 20 kHz to 200 kHz.

In an embodiment of the present invention, some or all of said one or more microphones 21, 22 may be arranged to transfer at least the measured sound data wirelessly. In an embodiment of the present invention, the measured sound data is utilized in condition monitoring of said electric drive systems device, in diagnostic monitoring of said electric drive systems device and/or in operational optimization of said electric drive systems device.

When referring to the term "monitoring" of an electric drive systems device, in this application, the term "monitoring" is meant to refer to "condition monitoring" of an electric drive systems device, as well as to "diagnostic monitoring" of an electric drive systems device, and also to "monitoring the operationally optimal status" of an electric drive systems device.

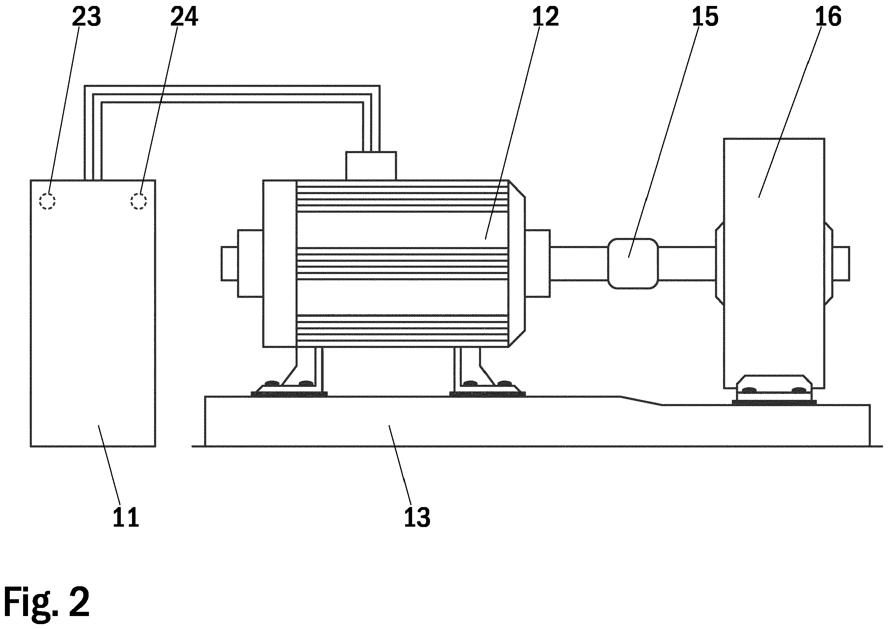

Figure 2 illustrates another embodiment of an arrangement for monitoring of an electric drive systems device according to the present invention. The presented another embodiment of an arrangement for monitoring of an electric drive systems device comprises a frequency converter 11 and a motor 12, which motor 12 is installed on a motor foundation 13. In the presented another embodiment, a driven/driving machine system 16 is connected to said motor 12 via a coupling arrangement 15. Whereas in the presented embodiment a driven machine 16 connected to said motor 12 is shown as a driven/driving machine 16, in yet another embodiment of the present invention the driven/driving machine 16 could be replaced by one or more driven/driving machine devices and/or one or more gears/ gear arrangements and/or one or more shafts/ shaft systems connected to said motor 12. Whereas in the presented embodiment a motor is shown, in yet another embodiment of the present invention the motor could be replaced by a generator.

In the presented another embodiment, said arrangement for monitoring of an electric drive systems device comprises one or more microphones 23, 24 arranged inside the frame of said electric drive systems device 11, i.e. said frequency converter 11. Said one or more microphones 23, 24 arranged inside the frame of said frequency converter 11 is/are utilised for measuring sound inside said frequency converter 11. Said measured sound is used for monitoring of an electric drive systems device, i.e. in the presented embodiment for monitoring of said frequency converter 11. In the embodiment presented in Figure 2 the positions of the microphones 23, 24 arranged inside the frame of said frequency converter 11 are indicated by a broken line.

In the presented embodiment, said one or more microphones 23, 24 is/are positioned inside the frame of said electric drive systems device 11, i.e. frequency converter 11. Said one or more microphones 23, 24 may be positioned in any suitable location inside the frame of said electric drive systems device.

In an embodiment of the present invention, some or all of said one or more microphones 23, 24 may be positioned in a suitable location for detecting noise originating from failure prone components, such as a fan. Each microphone of said one or more microphones 23, 24 can detect sound coming from different directions. Having said one or more microphones 23, 24 positioned inside the frame of said electric drive systems device, the external airborne disturbance from surrounding machinery can be avoided. Said microphones 23, 24 inside the frame of said electric drive systems device can also observe phenomena inside the frame of said electric drive systems device, e.g. partial discharges, that are not easy to detect outside the frame of said electric drive systems device.

In an embodiment of the present invention, some or all of said one or more microphones 23, 24 may be inserted inside the frame of said electric drive systems device through a threaded hole in the wall of the frame. In an embodiment of the present invention, a processing unit and a transmitter of said one or more microphones 23, 24 may be located on the other side outside of the wall of the frame.

When referring to the term "sound", in this application it is meant to refer to standard audio band frequencies from 20 Hz to 20 kHz and also to neighbouring infrasound frequencies from 2 Hz to 20 Hz and to neighbouring ultrasound frequencies from 20 kHz to 200 kHz.

In an embodiment of the present invention, some or all of said one or more microphones 23, 24 may be arranged to detect standard audio band frequencies from 20 Hz to 20 kHz and/or infrasound frequencies from 2 Hz to 20 Hz and/or ultrasound frequencies from 20 kHz to 200 kHz.

In an embodiment of the present invention, some or all of said one or more microphones 23, 24 may be arranged to transfer at least the measured sound data wirelessly. In an embodiment of the present invention, the measured sound data is utilized in condition monitoring of said electric drive systems device, in diagnostic monitoring of said electric drive systems device and/or in operational optimization of said electric drive systems device.

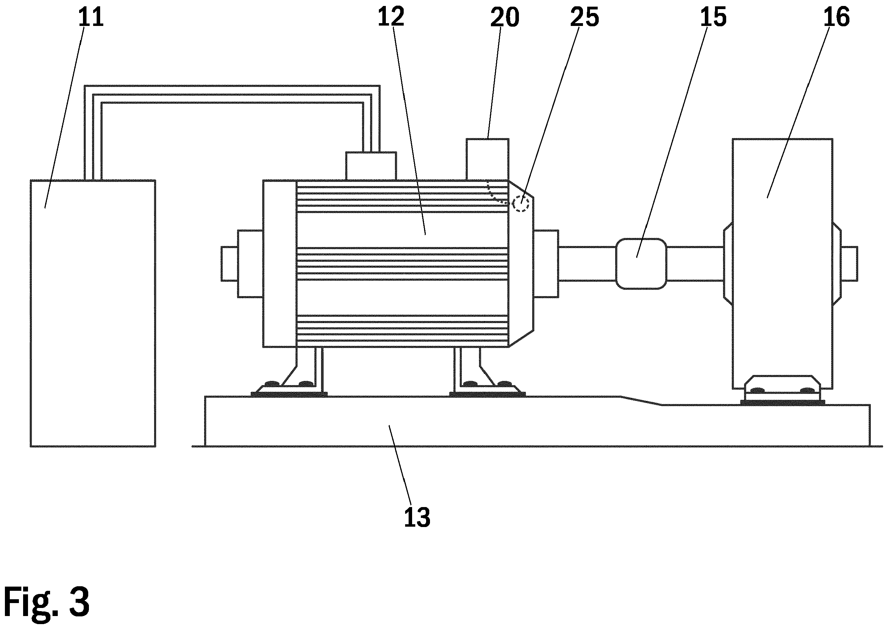

Figure 3 illustrates a third embodiment of an arrangement for monitoring of an electric drive systems device according to the present invention. The presented third embodiment of an arrangement for monitoring of an electric drive systems device comprises a frequency converter 11 and an electric drive systems device 12. In the presented third embodiment said electric drive systems device 12 is a motor 12, which motor 12 is installed on a motor foundation 13. In the presented embodiment, a driven/driving machine system 16 is connected to said motor 12 via a coupling arrangement 15. Whereas in the presented embodiment a driven machine 16 connected to said motor 12 is shown as a driven/driving machine 16, in another embodiment of the present invention the driven/driving machine 16 could be replaced by one or more driven/driving machine devices and/or one or more gears/ gear arrangements and/or one or more shafts/ shaft systems connected to said electric drive systems device 12. Whereas in the presented embodiment a motor is shown as an electric drive systems device, in another embodiment of the present invention the motor could be replaced by a generator as an electric drive systems device.

In the presented third embodiment, said arrangement for monitoring of an electric drive systems device comprises an auxiliary terminal unit 20 and one or more microphones 25 arranged inside the frame of said motor 12. In the presented third embodiment, said one or more microphones 25 comprise one microphone 25 arranged inside the frame of said motor 12 through a threaded hole in the wall of the frame. Said one microphone 25 is utilised for measuring sound inside said motor 12.

In the presented third embodiment, said auxiliary terminal unit 20 is located on the outside of the wall of the frame or bearing shield and comprises a processing unit and a transmitter. In Figure 3 the connection between the auxiliary terminal unit 20 and said one or more microphone 25 is indicated by a broken line. Said measured sound is used for monitoring of an electric drive systems device, i.e. in the presented embodiment for monitoring of said motor 12. In the embodiment presented in Figure 3 the position of the microphone 25 arranged inside the frame of said motor 12 are indicated by a broken line.

When referring to the term "sound", in this application it is meant to refer to standard audio band frequencies from 20 Hz to 20 kHz and also to neighbouring infrasound frequencies from 2 Hz to 20 Hz and to neighbouring ultrasound frequencies from 20 kHz to 200 kHz.

In an embodiment of the present invention, some or all of said one or more microphones 25 may be arranged to detect standard audio band frequencies from 20 Hz to 20 kHz and/or infrasound frequencies from 2 Hz to 20 Hz and/or ultrasound frequencies from 20 kHz to 200 kHz. In an embodiment of the present invention, some or all of said one or more microphones 25 may be arranged to transfer at least the measured sound data wirelessly. In an embodiment of the present invention, the measured sound data is utilized in condition monitoring of said electric drive systems device, in diagnostic monitoring of said electric drive systems device and/or in operational optimization of said electric drive systems device.

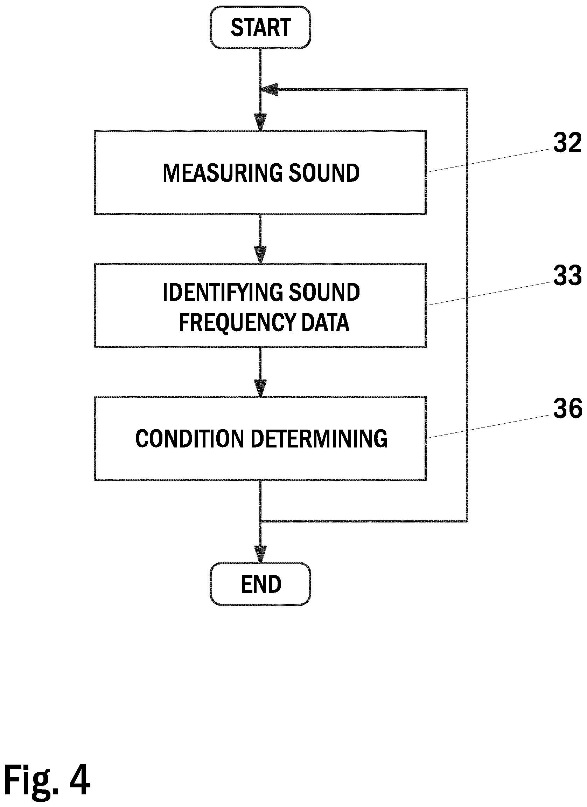

Figure 4 illustrates a flow diagram of an embodiment of a method for monitoring of an electric drive systems device according to the present invention. In the method according to the present embodiment, sound is measured 32 from the electric drive systems device by one or more microphones 21-25. When the sound inside the electric drive systems device is measured 32, as a result measured sound data is produced.

In the presented embodiment of Figure 4, as the next step, the sound time and frequency data of the electric drive systems device is identified 33 utilizing said measured sound data. Thereafter, with the help of the identified sound time and frequency data of the electric drive systems device, the condition of the electric drive systems device is then determined 36. When the condition of the electric drive systems device is determined 36, as a result condition determination of the electric drive systems device is produced. In the condition determining 36, a previously established threshold value/values may be used.

In the method according to the present embodiment, the steps of measuring sound 32, identifying sound time and frequency data 33 and condition determining 36 are repeated several times in a continuous loop, as deemed necessary.

In an embodiment of the present invention, said measured sound data and/or said identified sound time and frequency data is utilized in condition monitoring of said electric drive systems device, in diagnostic monitoring of said electric drive systems device and/or in operational optimization of said electric drive systems device. In an embodiment of the present invention, said condition determination is utilized in condition monitoring of said electric drive systems device, in diagnostic monitoring of said electric drive systems device and/or in operational optimization of said electric drive systems device.

In the method according to the present embodiment, each microphone of said one or more microphones 21-25 can detect sound coming from different directions. Having said one or more microphones 21-25 positioned inside the frame of said electric drive systems device, the external airborne disturbance from surrounding machinery can be avoided. Said microphones 21-25 inside the frame of said electric drive systems device can also observe phenomena inside the frame of said electric drive systems device, e.g. partial discharges, that are not easy to detect outside the frame of said electric drive systems device.

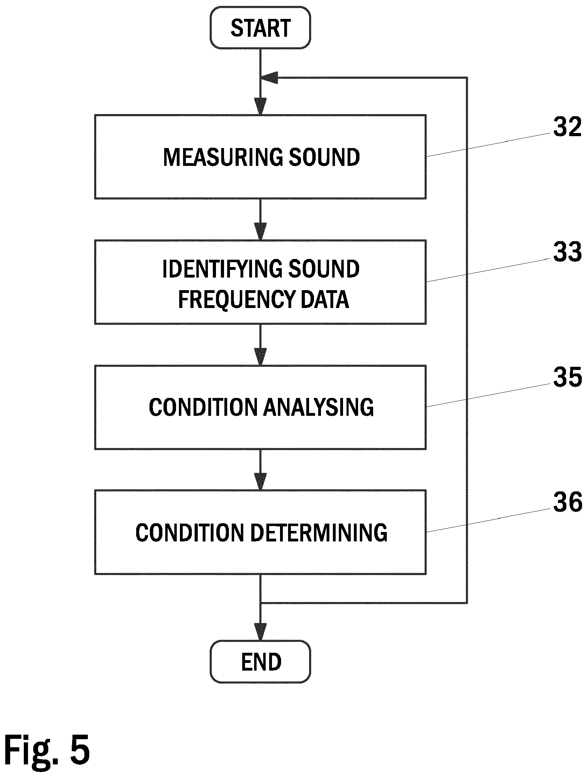

Figure 5 illustrates a flow diagram of another embodiment of a method for monitoring of an electric drive systems device according to the present invention. In the method according to the present another embodiment, sound is measured 32 from the electric drive systems device by one or more microphones 21-25. When the sound inside the electric drive systems device is measured 32, as a result measured sound data is produced.

In the presented embodiment of Figure 5, as the next step, the sound time and frequency data of the electric drive systems device is identified 33 utilizing said measured sound data.

Thereafter, the condition of the electric drive systems device is then analysed 35 with the help of an analysis software tool utilizing the identified sound time and frequency data of the electric drive systems device. In the condition analysing 35, a previously established threshold value/values may be used. When the condition of the electric drive systems device is analysed 35, as a result condition analysis of the electric drive systems device is produced.

Thereafter, with the help of the produced condition analysis of the electric drive systems device, the condition of the electric drive systems device is then determined 36. When the condition of the electric drive systems device is determined 36, as a result condition determination of the electric drive systems device is produced. In the condition determining 36, a previously established threshold value/values may be used. In the method according to the present another embodiment, the steps of measuring sound 32, identifying sound time and frequency data 33, condition analysing 35 and condition determining 36 are repeated several times in a continuous loop, as deemed necessary.

In an embodiment of the present invention, said measured sound data and/or said identified sound time and frequency data is utilized in condition monitoring of said electric drive systems device, in diagnostic monitoring of said electric drive systems device and/or in operational optimization of said electric drive systems device.

In an embodiment of the present invention, said condition analysis and/or said condition determination is utilized in condition monitoring of said electric drive systems device, in diagnostic monitoring of said electric drive systems device and/or in operational optimization of said electric drive systems device.

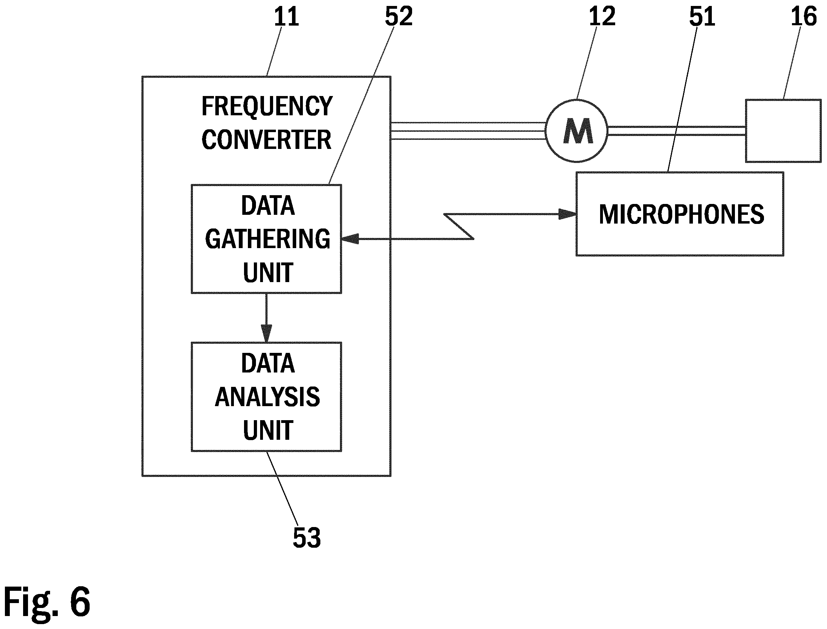

21-25 21-25 21-25 21-25 21-25 21-25 Figure 6 illustrates a block diagram of a fourth embodiment of an arrangement for monitoring of an electric drive systems device according to the present invention. The presented fourth embodiment of an arrangement for monitoring of an electric drive systems device comprises a frequency converter 11, an electric machine 12 and a driven/driving machine system 16 connected to said electric machine 12. The presented fourth embodiment of an arrangement for monitoring of an electric drive systems device comprises one or more microphones 51 arranged inside a frame of said electric drive systems device. Whereas in the presented embodiment a driven machine 16 connected to a motor 12 is shown as a driven/driving machine system 16, in another embodiment of the present invention the driven/driving machine system 16 could be replaced by one or more driven/driving machine devices and/or one or more gears/ gear arrangements and/or one or more shafts/ shaft systems connected to said electric machine 12. Whereas in the presented embodiment a motor is shown as an electric machine, in another embodiment of the present invention the motor could be replaced by a generator as an electric machine.

In presented fourth embodiment of an arrangement for monitoring of an electric drive systems device, the sound data gathering and analysis is implemented on the frequency converter 11. In the presented fourth embodiment, the frequency converter 11 comprises a data gathering unit 52 and a data analysis unit 53.

Said data gathering unit 52 gathers data related to the sound of an electric drive systems device, e.g. of a motor, said gathered data including control data and measured sound data of the electric drive systems device.

Said measured sound data of the electric drive systems device includes sound data received from said one or more microphones 51. Said one or more microphones 51 may be arranged to send said measured sound data to said data gathering unit 52 wirelessly. Said data gathering unit 52 of the frequency converter 11 may be arranged to receive some or all of said measured sound data from said one or more microphones 51 wirelessly.

The data gathering unit 52 then sends the gathered data to the data analysis unit 53. The data analysis unit 53 then analyses said gathered data and monitors, according to the present disclosure, the electric drive systems device. In an embodiment of the present invention, the measured sound data is utilized in condition monitoring of said electric drive systems device, in diagnostic monitoring of said electric drive systems device and/or in operational optimization of said electric drive systems device.

When referring to the term "monitoring" of an electric drive systems device, in this application, the term "monitoring" is meant to refer to "condition monitoring" of an electric drive systems device, as well as to "diagnostic monitoring" of an electric drive systems device, and also to "monitoring the operationally optimal status" of an electric drive systems device.

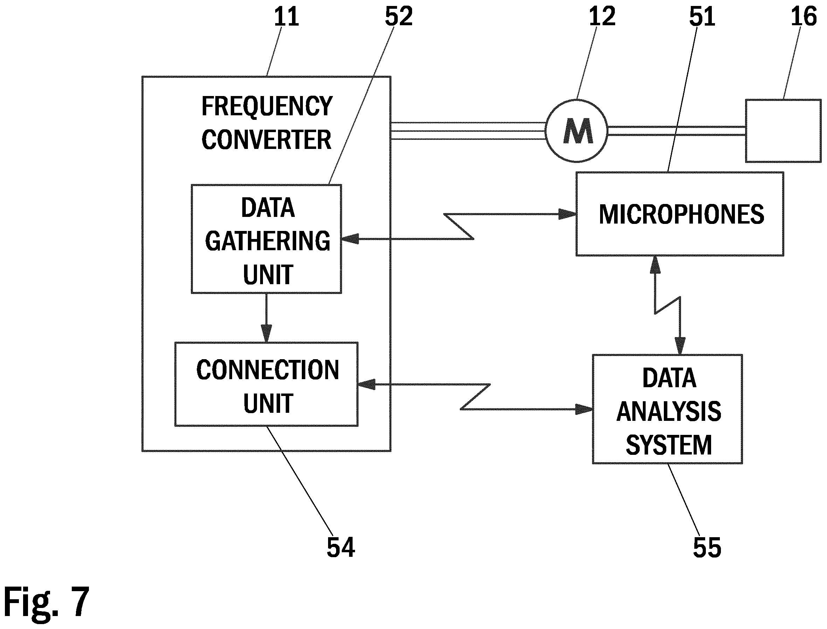

Figure 7 illustrates a block diagram of a fifth embodiment of an arrangement for monitoring of an electric drive systems device according to the present invention. The presented fifth embodiment of an arrangement for monitoring of an electric drive systems device comprises a frequency converter 11, an electric machine 12 and a driven/driving machine system 16 connected to said electric machine 12. The presented fifth embodiment of an arrangement for monitoring of an electric drive systems device comprises one or more microphones 51 arranged inside a frame of said electric drive systems device. Whereas in the presented embodiment a driven machine 16 connected to a motor 12 is shown as a driven/driving machine system 16, in another embodiment of the present invention the driven/driving machine system 16 could be replaced by one or more driven/driving machine devices and/or one or more gears/ gear arrangements and/or one or more shafts/ shaft systems connected to said electric machine 12. Whereas in the presented embodiment a motor is shown as an electric machine, in another embodiment of the present invention the motor could be replaced by a generator as an electric machine.

In presented fifth embodiment of an arrangement for monitoring of an electric drive systems device, the sound data analysis is implemented on an external data analysis system 55. Said external data analysis system 55 may be realized as a partially external data analysis system or as an entirely external data analysis system. In the presented fifth embodiment, the frequency converter 11 comprises a data gathering unit 52 and a connection unit 54.

Said data gathering unit 52 gathers data related to the sound of an electric drive systems device, e.g. of a motor, said gathered data including control data and measured sound data of the electric drive systems device. Said one or more microphones 51 may be arranged to send said measured sound data to said data gathering unit 52 wirelessly. Said data gathering unit 52 of the frequency converter 11 may be arranged to receive some or all of said measured sound data from said one or more microphones 51 wirelessly.

Said measured sound data of the electric drive systems device includes sound data received from said one or more microphones 51. Said one or more microphones 51 may be arranged to send said measured sound data to said data gathering unit 52 wirelessly. Said data gathering unit 52 of the frequency converter 11 may be arranged to receive some or all of said measured sound data from said one or more microphones 51 wirelessly.

The data gathering unit 52 then forwards said gathered data to the connection unit 54. The connection unit 54 is arranged to receive said gathered data from the data gathering unit 52 and to transmit said gathered data to said external data analysis system 55.

The external data analysis system 55 may be arranged to receive said gathered data from the connection unit 54 of the frequency converter 11. The external data analysis system 55 may be implemented in a computer. Said computer may be a laptop, a desktop computer, or a cluster of computer servers, for example. The connection unit 54 may connect to said computer via one or more known communication networks, such as Ethernet, for example. The external data analysis system 55 may also receive said measured sound data directly from said one or more microphones 51. Said one or more microphones 51 may be arranged to send said measured sound data to said external data analysis system 55 wirelessly. Said external data analysis system 55 may be arranged to receive some or all of said measured sound data from said one or more microphones 51 wirelessly. The external data analysis system 55 then analyses said gathered data and monitors, according to the present disclosure, the electric drive systems device.

In an embodiment of the present invention, the measured sound data is utilized in condition monitoring of said electric drive systems device, in diagnostic monitoring of said electric drive systems device and/or in operational optimization of said electric drive systems device.

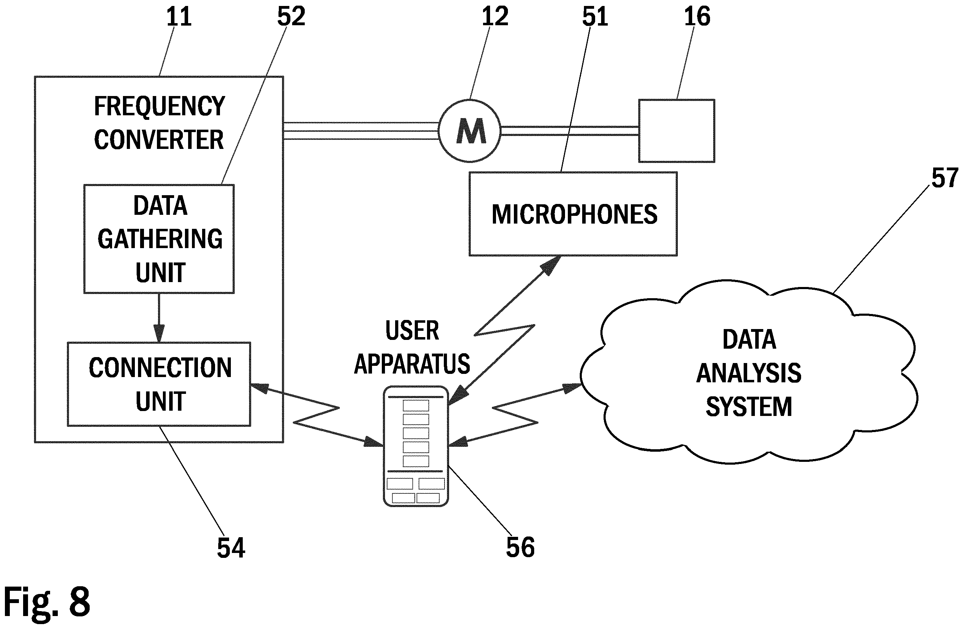

Figure 8 illustrates a block diagram of a sixth embodiment of an arrangement for monitoring of an electric drive systems device according to the present invention. The presented sixth embodiment of an arrangement for monitoring of an electric drive systems device comprises a frequency converter 11, an electric machine 12, a driven/driving machine system 16 connected to said electric machine 12, a user apparatus 56 and an external data analysis system 57. The presented sixth embodiment of an arrangement for monitoring of an electric drive systems device comprises one or more microphones 51 arranged inside a frame of said electric drive systems device. In the presented sixth embodiment said external data analysis system 57 is implemented as an external cloud computing service. Whereas in the presented embodiment a driven machine 16 connected to a motor 12 is shown as a driven/driving machine system 16, in another embodiment of the present invention the driven/driving machine system 16 could be replaced by one or more driven/driving machine devices and/or one or more gears/ gear arrangements and/or one or more shafts/ shaft systems connected to said electric machine 12. Whereas in the presented embodiment a motor is shown as an electric machine, in another embodiment of the present invention the motor could be replaced by a generator as an electric machine.

In presented sixth embodiment of an arrangement for monitoring of an electric drive systems device, the sound data analysis is implemented on an external data analysis system 57. Said external data analysis system 57 may be realized as a partially external data analysis system or as an entirely external data analysis system. In the presented sixth embodiment, the frequency converter 11 comprises a data gathering unit 52 and a connection unit 54.

Said data gathering unit 52 gathers data related to the monitoring of an electric drive systems device, i.e. of a motor, said gathered data including at least control data for motor 12. Said user apparatus 56 receives said measured vibration data from said one or more microphones 51 wirelessly. Said one or more microphones 51 are arranged to send said measured sound data to said user apparatus 56 wirelessly. Said user apparatus 56 is arranged to receive said measured sound data from said one or more microphones 51 wirelessly.

In presented sixth embodiment of an arrangement for monitoring of an electric drive systems device, the data gathering unit 52 then forwards said gathered data to the connection unit 54. The connection unit 54 is arranged to receive said gathered data from the data gathering unit 52 and to transmit said gathered data to said external data analysis system 57 via said user apparatus 56. So first, the connection unit 54 receives said gathered data from the data gathering unit 52 and transmits said gathered data to said user apparatus 56.

The connection unit 54 is configured to establish a connection with said user apparatus 56. The connection unit 54 may communicate with said user apparatus 56 via standard wireless communication protocols, for example. The connection unit 54 may establish the communication link via Bluetooth, ZigBee, near field communication (NFC), or infrared protocols, for example.

The user apparatus 56 may be a handheld communication device, such as a smart phone or a tablet computer. The user apparatus 56 may be arranged to receive said gathered data from the connection unit 54 of the frequency converter 11 and to forward said gathered data to said external data analysis system 57.

Said external data analysis system 57 may be arranged to receive said gathered data from the connection unit of the frequency converter 11 directly. The external data analysis system 57 may be implemented in a computer. Said computer may be a laptop, a desktop computer, or a cluster of computer servers, for example. The connection unit 54 may be arranged to connect to said computer via one or more known communication networks, such as Ethernet, for example. The external data analysis system 57 may also be arranged to receive said measured sound data directly from said one or more microphones 21-25.

Said external data analysis system 57 may be implemented as an external cloud computing service. The user apparatus 56 may be arranged to communicate with said external data analysis system 57 through wireless networks, such as cell phone networks or WLAN.

Said external data analysis system 57 may be arranged to receive said gathered data from the user apparatus 56. The external data analysis system 57 may also be arranged to receive user input from the user apparatus 56. The external data analysis system 57 is arranged to analyse said gathered data and monitor, according to the present disclosure, the electric drive systems device. In an embodiment of the present invention, the measured sound data is utilized in condition monitoring of said electric drive systems device, in diagnostic monitoring of said electric drive systems device and/or in operational optimization of said electric drive systems device.

In an embodiment of the present invention, two or more microphones are positioned inside the frame of said electric drive systems device. With multiple microphones the filtering of insignificant noise is easier with multiple microphones.

In an embodiment of the present invention, measurement data of said one or more microphones 21-25 is utilized in combination with traditional sensor data, e.g vibration sensor data.

In an embodiment of the present invention, measurement data of said one or more microphones 21-25 is calibrated according to previously known experience of faults and vibration signals.

The present invention provides an advanced, sophisticated, and straight-forward solution for monitoring of an electric drive systems device. With the help of the present invention the condition of an electric drive systems device can be monitored by monitoring the sound pressure.

The sound pressure is a scalar quantity having an integrative character. With the help of the present invention each microphone of said one or more microphones can detect sound coming from different directions. Also, the vibrations of any surface of the cavity emits acoustic waves to be heard by the microphone.

With the help of the present invention having said one or more microphones positioned inside the frame of said electric drive systems device, the external airborne disturbance from surrounding machinery can be avoided. The microphones inside the frame of said electric drive systems device can also observe phenomena inside the frame of said electric drive systems device, e.g. partial discharges, that are not easy to detect outside the frame of said electric drive systems device.

The present invention having said one or more microphones positioned inside the frame of said electric drive systems device can also be used as a complementary solution for monitoring of an electric drive systems device.

With the help of the method and an arrangement for monitoring of an electric drive systems device according to the present invention the monitoring of the electric drive systems device is easier and more efficient, especially in operational condition.

It is to be understood that the above description and the accompanying Figures are only intended to teach the best way known to the inventors to make and use the invention. It will be apparent to a person skilled in the art that the inventive concept can be implemented in various ways. The above-described embodiments of the invention may thus be modified or varied, without departing from the invention, as appreciated by those skilled in the art in light of the above teachings. It is therefore to be understood that the invention and its embodiments are not limited to the examples described above but may vary within the scope of the claims and their equivalents.

## Claims

1. A method for monitoring of an electric drive systems device (11, 12), in which method:
- sound inside an electric drive systems device (11, 12) is measured (32) as measured sound data by one or more microphones (21-25) arranged inside a frame of an electric drive systems device (11, 12), said measured sound data being utilized in monitoring of said electric drive systems device (11, 12).

2. A method according to claim 1, in which method:
- sound time and frequency data of said electric drive systems device (11, 12) is identified (33) utilizing said measured sound data.

3. A method according to claim 2, in which method:
- the condition of the electric drive systems device (11, 12) is analysed (35), and a condition analysis is produced utilizing said identified sound time and frequency data.

4. A method according to claim 2 or 3, in which method:
- the condition of the electric drive systems device (11, 12) is determined (36), and a condition determination is produced utilizing said identified sound time and frequency data and/or said produced condition analysis.

5. A method according to any of the claims 2-4, wherein said measured sound data and/or said identified sound time and frequency data is utilized in condition monitoring of said electric drive systems device (11, 12), in diagnostic monitoring of said electric drive systems device (11, 12) and/or in operational optimization of said electric drive systems device (11, 12).

6. A method according to any of the claims 2-5, wherein said condition analysis and/or said condition determination is utilized in condition monitoring of said electric drive systems device (11, 12), in diagnostic monitoring of said electric drive systems device (11, 12) and/or in operational optimization of said electric drive systems device (11, 12).

7. An arrangement for monitoring of an electric drive systems device (11, 12), said arrangement comprising an electric drive systems device (11, 12), and one or more microphones (21-25) arranged inside a frame of said electric drive systems device (11, 12),
- wherein said one or more microphones (21-25) is/are arranged for measuring sound inside said electric drive systems device (11, 12) and for producing measured sound data, said measured sound data being utilized in monitoring of said electric drive systems device (11, 12).

8. An arrangement according to claim 7, wherein some or all of said one or more microphones (21-25) is/are positioned in a small recess inside the frame of said electric drive systems device (11, 12).

9. An arrangement according to claim 7 or 8, wherein some or all of said one or more microphones (21-25) comprises/comprise a protective hood arranged inside the frame of said electric drive systems device (11, 12).

10. An arrangement according to any of the claims 7-9, wherein some or all of said one or more microphones (21-25) is/are arranged to tolerate very high sound pressure levels up to 160 dB SPL.

11. An arrangement according to any of the claims 7-10, wherein some or all of said one or more microphones (21-25) is/are arranged to detect sound frequencies from 20 Hz to 20 kHz and/or infrasound frequencies from 2 Hz to 20 Hz and/or ultrasound frequencies from 20 kHz to 200 kHz.

12. An arrangement according to any of the claims 7-11, wherein said arrangement comprises a frequency converter (11) having a data analysis unit (53) arranged for analysing said measured sound data and for monitoring the electric drive systems device (11, 12).

13. An arrangement according to any of the claims 7-12, wherein said arrangement comprises an external data analysis system (55, 57) arranged for analysing said measured sound data and/or for monitoring the electric drive systems device (11, 12).

14. An arrangement according to claim 13, wherein said arrangement comprises a user apparatus (56) arranged for receiving said measured sound data and for forwarding said measured sound data to said external data analysis system (55, 57).

15. An arrangement according to any of the claims 7-14, wherein said measured sound data is utilized in condition monitoring of said electric drive systems device (11, 12), in diagnostic monitoring of said electric drive systems device (11, 12) and/or in operational optimization of said electric drive systems device (11, 12).

16. A frequency converter (11) of an arrangement according to any of the claims 7-15.
